(19) Europäisches Patentamt / European Patent Office / Office européen des brevets

(11) **EP 1 705 483 B1**

(12) **FASCICULE DE BREVET EUROPEEN**

(45) Date de publication et mention
de la délivrance du brevet:
**19.09.2007 Bulletin 2007/38**

(51) Int Cl.:
*G01N 29/06* *(2006.01)*     *G01N 29/11* *(2006.01)*
*G01N 29/265* *(2006.01)*     *G01N 29/28* *(2006.01)*

(21) Numéro de dépôt: **05292745.6**

(22) Date de dépôt: **20.12.2005**

(54) **Détermination de l'étendue d'une zone d'ombre latérale dans un procédé de contrôle par ultrasons**

Bestimmung der Fläche einer lateralen Schattenzone in einem Ultraschallprüfungsverfahren

Determination of the expanse of a lateral shadow area in a method of ultrasound testing

(84) Etats contractants désignés:
**DE FR GB**

(30) Priorité: **06.01.2005 FR 0500099**

(43) Date de publication de la demande:
**27.09.2006 Bulletin 2006/39**

(73) Titulaire: **SNECMA**
**75015 Paris (FR)**

(72) Inventeurs:
• **Chatellier, Jean-Yves François Roger**
**94110 Arcueil (FR)**
• **Coulette, Richard Michaël**
**94250 Gentilly (FR)**

(74) Mandataire: **Ramey, Daniel et al**
**Ernest Gutmann - Yves Plasseraud S.A.S.**
**3, rue Auber**
**75009 Paris (FR)**

(56) Documents cités:
**FR-A- 2 806 162**          **US-A- 3 969 926**
**US-A- 5 565 627**

EP 1 705 483 B1

## Description

La présente invention concerne la détermination de l'étendue d'une zone d'ombre latérale correspondant à un bord d'une pièce, dans un procédé de contrôle de la pièce en immersion au moyen d'un faisceau d'ultrasons.

Le contrôle d'une pièce en immersion au moyen d'un faisceau d'ultrasons permet de détecter des défauts dans la pièce tels que par exemple des bulles, des inclusions, etc.

Cette technique est mise en oeuvre dans une cuve remplie d'un liquide de couplage acoustique tel que de l'eau, avec un générateur d'ultrasons tel qu'un transducteur électroacoustique qui est immergé dans l'eau et qui est orienté vers la pièce à contrôler perpendiculairement à une surface de celle-ci, le transducteur étant séparé de cette surface de la pièce par une hauteur d'eau appelée « colonne d'eau ».

Le transducteur émet un faisceau d'ondes ultrasonores qui sont pour partie réfléchies à la surface de la pièce et pour partie transmises à l'intérieur de la pièce, les ondes ultrasonores transmises pouvant rencontrer sur leur trajectoire un défaut interne capable de les réfléchir. Les échos provenant de ces réflexions sont captés par le transducteur, qui fonctionne également comme récepteur, et leurs amplitudes représentent l'importance des défauts détectés.

Le document US 3, 969, 926 décrit un tel dispositif de contrôle non-destructif d'une pièce en immersion au moyen d'un faisceau d'ultrasons.

En pratique, le contrôle d'une pièce comprend un déplacement relatif entre la pièce et le transducteur ou une série de transducteurs, permettant de réaliser un balayage de la pièce par un ou des faisceaux d'ultrasons.

Lorsqu'un faisceau d'ultrasons est approché progressivement d'un bord de la pièce, une partie de plus en plus grande de la section de ce faisceau à la surface de la pièce dépasse du bord de la pièce, de sorte qu'une partie de l'énergie du faisceau est émise en dehors de la pièce et ne sera pas réfléchie par un défaut de la partie de la pièce couverte par le faisceau.

En conséquence, le défaut sera détecté sous forme d'un écho, mais avec une amplitude de plus en plus faible quand on approche le faisceau du bord de la pièce, cette amplitude étant nulle quand le faisceau ne rencontre plus la pièce.

La partie de la pièce dans laquelle l'amplitude de l'écho à la réflexion du faisceau sur un défaut diminue en raison de ce phénomène est une zone non contrôlable par les procédés connus et est appelée zone d'ombre ou zone morte latérale de la pièce. La technique connue ne permet pas de déterminer l'étendue précise de cette zone morte à une profondeur quelconque dans la pièce et on est donc amené à lui donner par précaution une valeur maximale, par exemple de 12 millimètres, alors qu'elle peut être beaucoup plus faible en réalité, par exemple deux fois plus faible, ce qui correspond à une perte de matière relativement importante.

L'invention a notamment pour but de déterminer la zone d'ombre latérale d'une pièce dans un procédé de contrôle par ultrasons, cette détermination étant précise, fiable et réalisable simplement.

Elle propose à cet effet un procédé de détermination de l'étendue d'une zone d'ombre latérale correspondant à un bord d'une pièce, dans un procédé de contrôle de la pièce en immersion au moyen d'au moins un faisceau d'ultrasons émis par un transducteur orienté perpendiculairement à une surface de la pièce, caractérisé en ce qu'il consiste à déterminer l'étendue de la zone d'ombre depuis le bord de la pièce par mesure de la section efficace du faisceau d'ultrasons à la surface de la pièce, l'étendue de la zone d'ombre pour une distance déterminée entre le transducteur et la surface de la pièce étant égale au rayon d'une section efficace du faisceau à la surface de la pièce, et à déterminer cette section efficace à partir des variations de l'amplitude d'un écho du faisceau en fonction de la distance de l'axe du faisceau au bord de la pièce.

L'invention est basée sur la constatation que la zone d'ombre latérale est liée, non pas au diamètre à -6dB de la tâche focale du faisceau qui varie hyperboliquement avec la profondeur dans la pièce, mais à la section d'un cône d'énergie émis par le transducteur et dont le diamètre ou le rayon varie linéairement avec la profondeur dans la pièce.

De façon simple, la section du cône d'énergie, ou section efficace du faisceau, peut être déterminée à partir des variations d'amplitude d'un écho du faisceau en fonction de la distance de l'axe du faisceau au bord de la pièce.

Dans un premier mode de réalisation de l'invention, la distance entre le transducteur et la surface de la pièce étant constante, la section efficace du faisceau à la surface de la pièce est déterminée par mesure de la variation de l'amplitude de l'écho à la réflexion du faisceau sur la surface de la pièce en fonction de la distance entre l'axe du faisceau et le bord de la pièce.

Le procédé consiste par exemple à mesurer une distance $d_1$ entre l'axe du faisceau et le bord de la pièce à partir de laquelle l'amplitude de l'écho commence à diminuer quand la distance $d_1$ au bord de la pièce diminue, à mesurer une distance $d_2$ entre l'axe du faisceau et le bord de la pièce pour laquelle ladite amplitude devient nulle, et à obtenir la dimension de la zone d'ombre depuis le bord de la pièce par calcul de la valeur $(d_1 + d_2) / 2$. En pratique, on mesure la distance de l'axe du faisceau au bord de la pièce quand l'amplitude de l'écho est égale à une faible fraction, par exemple de quelques pourcents, de la valeur maximale de cette amplitude, et on détermine par extrapolation la distance $d_2$ entre l'axe du faisceau et le bord de la pièce pour laquelle ladite amplitude est nulle.

Dans un second mode de réalisation de l'invention, le transducteur est orienté perpendiculairement à la surface de la pièce en dehors de la zone d'ombre, et un élément de déviation du faisceau est déplacé en translation sur la surface de la pièce, le long d'un axe qui coupe l'axe du faisceau d'ultrasons, le procédé consistant à relever les positions de cet élément pour lesquelles l'amplitude de l'écho à la réflexion du faisceau sur la surface de la pièce varie entre une valeur maximale et une valeur nulle.

Avantageusement, l'invention propose également dans ce cas d'aligner l'axe d'émission du transducteur sur un trou étalon formé dans la pièce en dehors de la zone d'ombre, et à mesurer la variation de l'amplitude de l'écho à la réflexion du faisceau sur le fond du trou étalon lors de l'interception progressive du faisceau par l'élément de déviation.

L'élément de déviation est par exemple un prisme présentant au moins une face de réflexion inclinée, par exemple à 45°, sur la surface de la pièce et sur l'axe du faisceau. Le procédé peut consister à relever les deux positions du prisme diamétralement opposées par rapport à l'axe du faisceau d'ultrasons, pour lesquelles l'amplitude de l'écho à la réflexion du faisceau sur la surface de la pièce commence à diminuer depuis une valeur maximale quand on rapproche le prisme de l'axe du faisceau, et à calculer la moitié de la distance entre ces deux positions pour obtenir l'étendue de la zone d'ombre latérale.

Dans un troisième mode de réalisation de l'invention, le procédé consiste à déterminer la dimension de la zone d'ombre latérale sur une pièce étalon comportant des trous identiques à fond plat formés à la même profondeur et à différentes distances du bord de la pièce, l'un de ces trous étant en dehors de la zone d'ombre et les autres trous étant dans cette zone, à aligner le transducteur sur chaque trou successivement et à mesurer l'amplitude de l'écho à la réflexion du faisceau sur le fond du trou, à construire la courbe de variation de cette amplitude entre une valeur maximale et une valeur nulle en fonction de la distance entre les axes des trous et le bord de la pièce, et à en déduire la dimension de la zone d'ombre égale à la valeur de la distance pour laquelle ladite amplitude commence à diminuer quand la distance des axes des trous au bord de la pièce diminue.

Dans un quatrième mode de réalisation de l'invention, le procédé consiste à construire une droite de variation du rayon de la section efficace du faisceau d'ultrasons en fonction de la profondeur de pénétration de ce faisceau dans la pièce, à partir d'une valeur initiale du rayon correspondant à une distance nulle entre le transducteur et la pièce pour laquelle le rayon de la section efficace à la surface de la pièce est égal au rayon du transducteur, et d'une valeur finale du rayon à une profondeur dans la pièce correspondant à la distance focale du transducteur. Le procédé consiste, ensuite, pour une distance donnée entre le transducteur et la pièce et pour une profondeur donnée dans la pièce, à calculer l'étendue de la zone d'ombre latérale par la différence entre le rayon de la section efficace du faisceau à la surface de la pièce et le rayon de la section efficace à la profondeur considérée. En pratique, on peut déterminer la valeur finale du rayon de la section efficace du faisceau en plaçant le transducteur à une distance de la surface de la pièce correspondant à sa distance focale, et en mesurant le rayon de la section efficace du faisceau à la surface de la pièce comme précité.

D'autres caractéristiques, détails et avantages de l'invention apparaîtront à la lecture de la description suivante faite à titre d'exemple non limitatif en référence aux dessins annexés dans lesquels :

- la figure 1 est une vue schématique en coupe d'un dispositif de contrôle d'une pièce en immersion au moyen d'un faisceau d'ultrasons ;
- les figures 2 à 4 sont des vues schématiques d'une surface de la pièce, illustrant un premier mode de réalisation du procédé selon l'invention de détermination de l'étendue d'une zone d'ombre latérale ;
- la figure 5 est un graphe représentant l'évolution de l'amplitude d'un écho du faisceau en fonction de la position de l'axe du faisceau par rapport au bord de la pièce ;
- les figures 6 et 7 sont des vues schématiques en coupe de la pièce, illustrant un second mode de réalisation du procédé selon l'invention ;
- la figure 8 est un graphe représentant l'évolution de l'amplitude d'un écho du faisceau en fonction de la position d'un bord d'un élément déplacé sur la surface de la pièce par rapport à l'axe du faisceau ;
- la figure 9 est une vue schématique d'une surface de la pièce, illustrant un troisième mode de réalisation du procédé selon l'invention ;
- la figure 10 est un graphe représentant l'évolution de l'amplitude d'un écho du faisceau en fonction de la distance de trous dans la pièce aux bords de celle-ci ;
- la figure 11 est un graphe représentant l'évolution du rayon de la section efficace du faisceau en fonction de la profondeur de pénétration de ce faisceau.

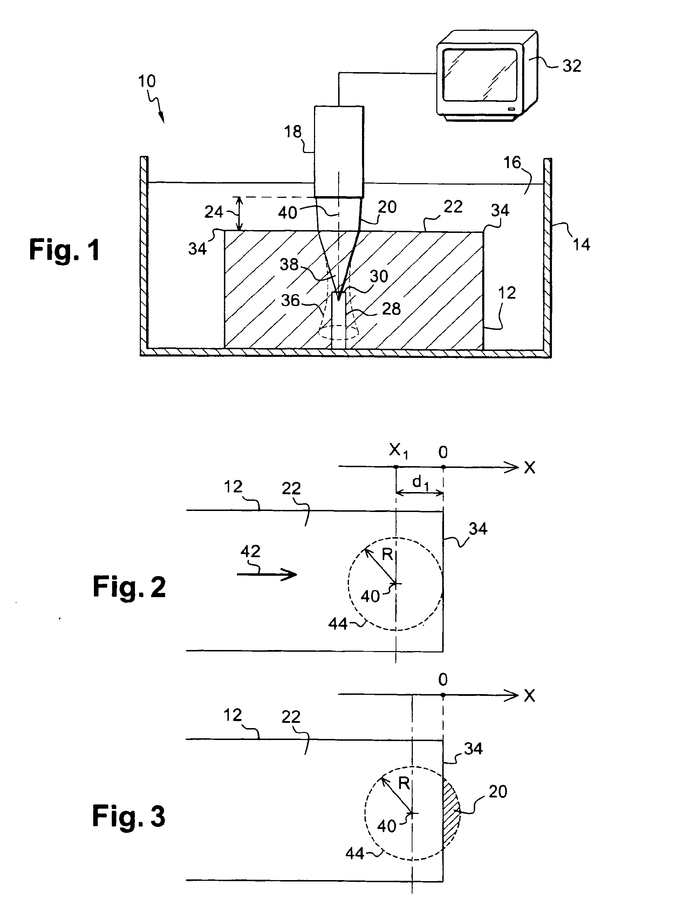

La figure 1 représente schématiquement un dispositif 10 de contrôle d'une pièce 12 en immersion au moyen d'un faisceau d'ultrasons, comprenant une cuve 14 remplie d'eau 16 dans laquelle sont immergés la pièce 12 à contrôler et un transducteur électroacoustique 18 générant un faisceau d'ondes ultrasonores 20 orienté perpendiculairement à une surface 22 de la pièce 12, le transducteur 18 étant séparé de cette surface 22 de la pièce par une hauteur d'eau appelée « colonne d'eau » 24.

Le transducteur 18 est relié à des moyens non représentés de commande, tels qu'un microordinateur, et de génération d'impulsions.

Les ondes ultrasonores émises sont pour partie réfléchies à la surface 22 de la pièce et pour partie transmises à l'intérieur de celle-ci, les ondes ultrasonores transmises dans la pièce 12 pouvant rencontrer sur leur trajectoire un défaut capable de les réfléchir. Un défaut est par exemple une bulle, une inclusion, etc, et est schématiquement représenté par un trou 28 dont le fond plat 30 est situé du côté de la surface 22 de la pièce, le trou débouchant sur la surface inférieure de la pièce 12.

Les échos dus à la réflexion des ondes ultrasonores sur la surface 22 de la pièce et/ou sur les défauts dans la pièce 12 sont captés par le transducteur 18 et sont enregistrés et affichés sur des moyens 32 de visualisation de leurs amplitudes, tels qu'un oscilloscope, qui sont reliés au transducteur 18.

Le procédé selon l'invention permet de déterminer avec précision l'étendue d'une zone morte ou zone d'ombre latérale correspondant à un bord 34 de la pièce 12, cette zone d'ombre étant une partie de cette pièce 12 dans laquelle l'amplitude de l'écho dû à la réflexion du faisceau sur un défaut diminue en raison du phénomène précédemment décrit.

Selon l'invention, la zone d'ombre latérale est liée, non pas à la dimension à -6dB de la tâche focale du faisceau 20 qui varie de façon hyperbolique comme représenté en 36 avec la profondeur dans la pièce 12, mais à la section d'un cône d'énergie 38 émis par le transducteur 18 et dont le rayon varie linéairement avec la profondeur dans la pièce.

On peut relier l'étendue de la zone d'ombre à la dimension de la section efficace du faisceau 20 à la surface 22 de la pièce, et déterminer cette section efficace à partir des variations de l'amplitude d'un écho du faisceau 20 réfléchi sur la surface de la pièce en fonction de la distance de l'axe 40 du faisceau 20 au bord 34 de la pièce.

Dans le premier mode de réalisation représenté aux figures 2 à 4, le transducteur 18 est séparé de la surface 22 de la pièce par une colonne d'eau 24 d'une valeur prédéterminée et est orienté perpendiculairement à la surface 22 de la pièce et à distance suffisante de ses bords. On mesure l'amplitude de l'écho à la réflexion du faisceau 20 sur la surface 22 de la pièce. En pratique, cette amplitude peut être réglée à 80% de la hauteur d'écran des moyens 32 pour faciliter la visualisation de la variation d'amplitude des échos.

Le transducteur 18 est ensuite déplacé en translation au dessus de la pièce 12 suivant la flèche 42, en direction du bord 34 de la pièce et parallèlement à la surface 22 de la pièce et l'on relève la position pour laquelle l'amplitude de l'écho à la réflexion sur la surface 22 de la pièce commence à diminuer depuis la valeur maximale, puis la position dans laquelle cette amplitude devient sensiblement nulle.

On repère la position du transducteur 18 à partir de celle de l'axe 40 du faisceau 20 sur un axe X orienté suivant la flèche 42 et dont l'origine est située au niveau du bord 34 de la pièce.

En figure 2, l'axe 40 du faisceau est dans une position $X_1$ pour laquelle le bord 34 de la pièce est tangent à la section efficace 44 du faisceau 20 à la surface de la pièce, et l'amplitude de l'écho à la réflexion du faisceau sur la surface 22 de la pièce a une valeur sensiblement égale à la valeur maximale. On définit par $d_1$ la distance entre l'axe 40 du faisceau et le bord 34 de la pièce, égale à $|X_1|$.

En figure 3, le transducteur 18 a été déplacé dans une position pour laquelle une partie de l'énergie du faisceau 20 est émise en dehors de la pièce 12, de sorte que l'amplitude de l'écho à la réflexion du faisceau sur la surface 22 de la pièce a une valeur inférieure à la valeur maximale.

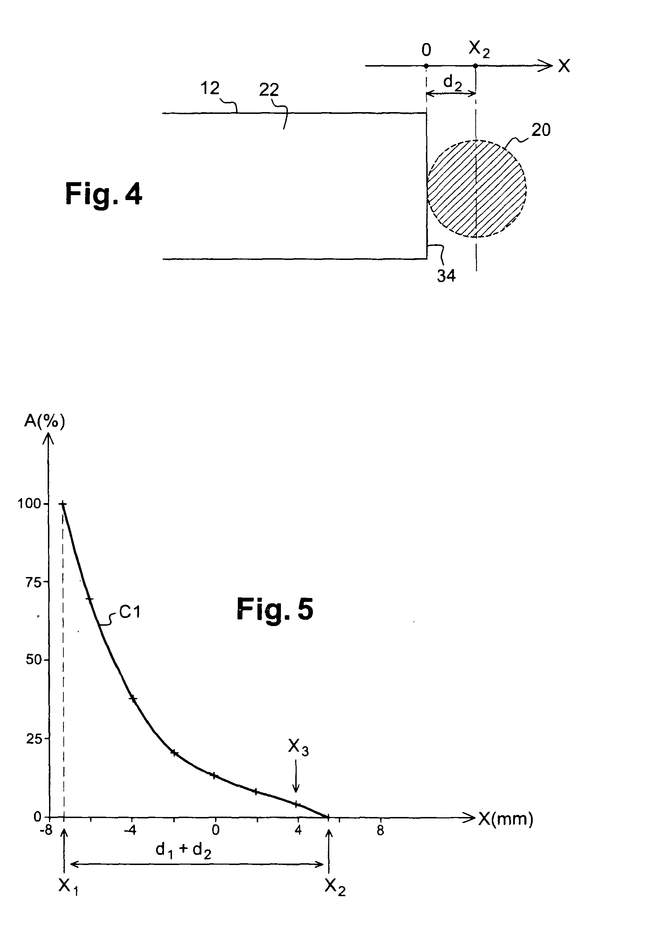

En figure 4, le transducteur 18 a été déplacé dans une position $X_2$ pour laquelle le faisceau est émis à l'extérieur de la pièce 12, la section efficace du faisceau 20 dans le plan de la surface 22 de la pièce étant extérieurement tangente au bord 34, de sorte que l'amplitude de l'écho à la réflexion du faisceau sur la surface 22 de la pièce est sensiblement nulle. On définit par $d_2$ la distance entre l'axe 40 du faisceau et le bord 34 de la pièce, égale à $|X_2|$.

La figure 5 est un graphe représentant la courbe C1 de variation de l'amplitude de l'écho à la réflexion du faisceau 20 sur la surface 22 de la pièce en fonction de la position de l'axe 40 du faisceau par rapport au bord 34 de la pièce le long de l'axe X. Pour construire cette courbe, on relève les valeurs de l'amplitude de l'écho pour les positions $X_1$ et $X_2$ et pour un certain nombre de positions intermédiaires.

L'amplitude décroît depuis sa valeur maximale correspondant à la position $X_1$ jusqu'à une valeur nulle ou sensiblement nulle correspondant à la position $X_2$.

La dimension de la zone d'ombre est égale au rayon R de la section efficace 44 du faisceau 20 à la surface de la pièce qui est défini par l'expression :

$$R = (d_1 + d_2) / 2$$

Dans l'exemple illustré en figure 5, pour une valeur de la colonne d'eau 24 de 40,8mm entre un transducteur Panametrics V322-239 440 de focale F = 8 pouces et la surface 22 de la pièce 12, la dimension de la zone d'ombre est égale à :

$$R = (d_1 + d_2) / 2 = (|X_1| + |X_2|) / 2 = (7,26mm + 5,6mm) / 2 = 6,43mm$$

En pratique, les valeurs de $X_1$ et plus particulièrement de $X_2$ peuvent être difficiles à obtenir avec précision. Elles peuvent être déterminées par extrapolation en utilisant des moyens appropriés de calcul de régression linéaire ou polynomiale de la courbe obtenue expérimentalement.

En particulier, on ne fait pas la mesure de l'amplitude de l'écho pour la position $X_2$, mais pour une position voisine $X_3$ où l'amplitude est par exemple égale à 5% de sa valeur maximale. On prolonge ensuite la courbe C1 jusqu'en $X_2$ par extrapolation.

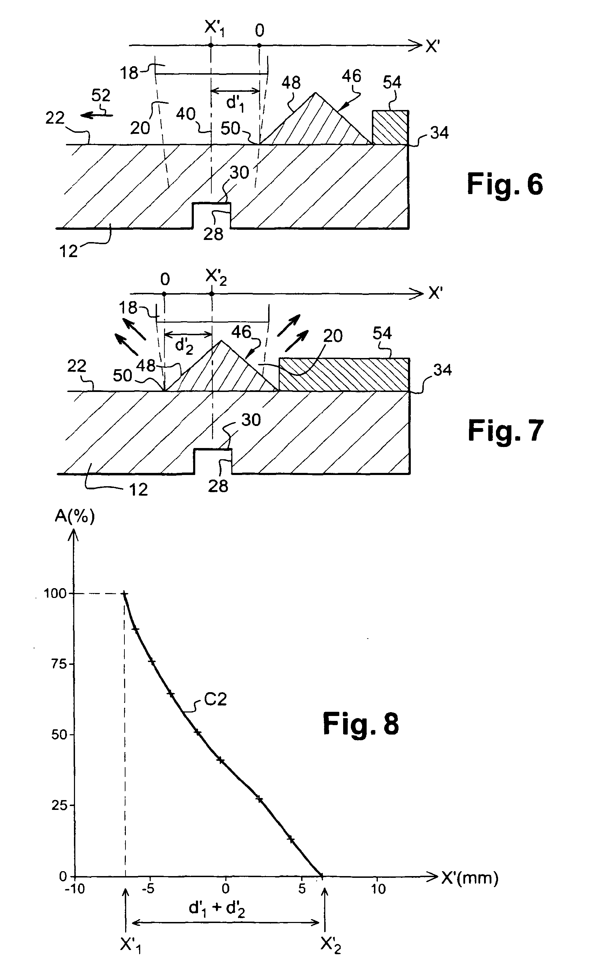

Dans un second mode de réalisation de l'invention représenté aux figures 6 et 7, le transducteur 18 est séparé de la surface 22 de la pièce par une colonne d'eau 24 d'une valeur prédéterminée, et est orienté perpendiculairement à la surface 22 de la pièce. L'amplitude de l'écho à la réflexion sur la surface 22 en dehors de la zone d'ombre est mesurée et son affichage est réglé à 80% de la hauteur d'écran.

Un élément 46 de déviation du faisceau 20 est posé sur la surface 22 de la pièce et est déplacé en direction de l'axe 40 du faisceau 20 pour dévier une partie de ce faisceau en dehors de la zone de captation du transducteur 18.

Dans l'exemple représenté, l'élément de déviation 46 est un prisme présentant au moins une face de réflexion 48 inclinée, par exemple à 45°, sur la surface 22 de la pièce et sur l'axe 40 du faisceau, cette face 48 se terminant par un bord 50 en contact avec la surface 22 de la pièce.

Le prisme 46 est déplacé suivant la flèche 52 le long d'une axe qui coupe l'axe 40 du faisceau d'ultrasons 20, entre deux positions extrêmes dans l'une desquelles le prisme 46 est extérieurement tangent à la section efficace du faisceau sur la surface 22 de la pièce, comme représenté en figure 6 où le prisme 46 est dans la position $X'_1$, et dans l'autre desquelles il dévie entièrement le faisceau 20, comme représenté en figure 7 où le prisme est dans la position $X'_2$, $d'_1$ et $d'_2$ étant respectivement les valeurs de $|X'_1|$ et $|X'_2|$.

Le prisme 46 est par exemple positionné au moyen de cales 54 interposées entre le prisme 46 et le bord 34 de la pièce, les cales 54 ayant des dimensions très précises permettant de fixer avec une très grande précision, par exemple de l'ordre du micromètre, la position du bord 50 du prisme 46 par rapport à l'axe 40 du faisceau.

La variation de l'amplitude de l'écho à la réflexion du faisceau sur la surface 22 de la pièce en fonction de la position du bord 50 du prisme par rapport à l'axe 40 est représentée par la courbe C2 de la figure 8. Pour une valeur de la colonne d'eau de 40,8mm entre un transducteur Panametrics V322-239 440 de focale F = 8 pouces et la surface 22 de la pièce, la dimension de la zone d'ombre est égale à :

$$R = (d'_1 + d'_2) / 2 = (|X'_1| + |X'_2|) / 2 = (6,69mm + 6,31mm) / 2 = 6,50mm$$

Les valeurs de $X'_1$ et $X'_2$ peuvent également être extrapolées comme précédemment décrit pour plus de précision.

En variante, le procédé peut consister à relever les deux positions du bord 50 du prisme diamétralement opposées par rapport à l'axe 40 du faisceau, pour lesquelles le bord 50 du prisme est tangent à la section efficace du faisceau 20 à la surface 22 de la pièce, la valeur de l'amplitude de l'écho à la réflexion du faisceau sur la surface de la pièce étant sensiblement maximale dans ces deux positions.

Pour cela, le prisme 46 est déplacé sur la surface 22 de la pièce suivant la flèche 52 jusqu'à la position $X'_1$, puis est disposé de l'autre côté du faisceau 20, symétriquement par rapport à l'axe 40, et est déplacé sur la surface 22 de la pièce dans le sens opposé à la flèche 52, jusqu'à une position $X''_1$, équivalente à $X'_1$.

La distance entre ces deux positions $X'_1$ et $X''_1$ permet de déterminer la dimension de la zone d'ombre qui est égale à :

$$R = (|X'_1| + |X''_1|) / 2.$$

En variante, comme représenté en figures 6 et 7, l'axe 40 du faisceau 20 peut être aligné sur un trou 28 formé dans la pièce à une profondeur donnée et à distance de ses bords 34, de manière à ce que le transducteur 18 capte l'écho à la réflexion du faisceau sur le fond plat 30 du trou. Dans ce cas, on relève les amplitudes de cet écho pour les différentes positions du bord 50 du prisme par rapport à l'axe 40 du faisceau, comme précédemment, on construit une courbe de variation analogue à la courbe C2 de la figure 8, et on en déduit l'étendue de la zone d'ombre.

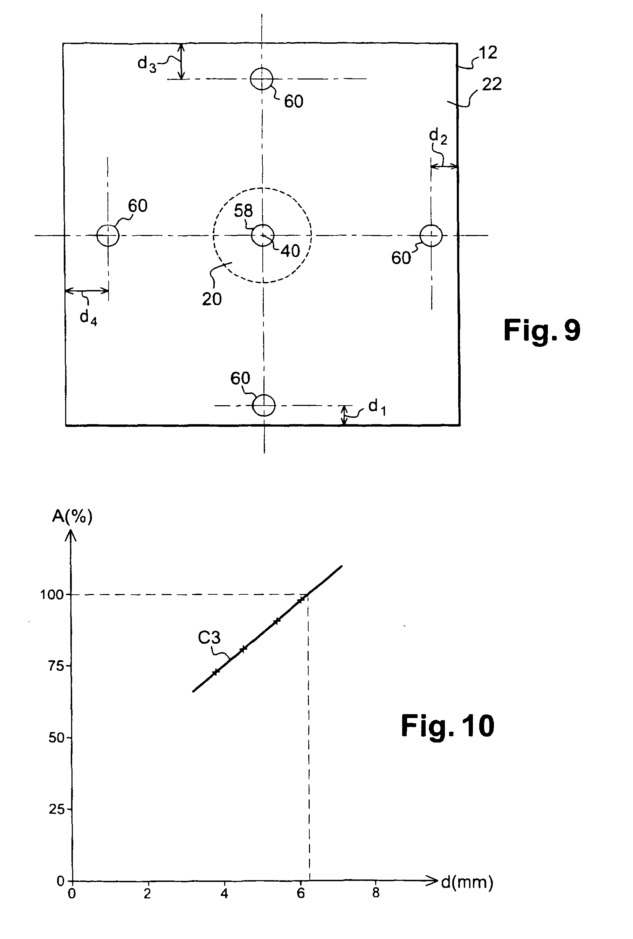

Dans un troisième mode de réalisation de l'invention représenté en figure 9, on utilise une pièce étalon 12 qui comprend une pluralité de trous 58, 60 à fond plat, identiques et formés dans la pièce 12 à une même profondeur déterminée, un de ces trous 58 étant suffisamment distant des bords 34 de la pièce pour être en dehors de la zone d'ombre, et les autres trous 60 étant à proximité des bords 34 de la pièce, leurs axes étant à différentes distances des bords 34 et se trouvant dans la zone d'ombre.

Le trou 58 est par exemple formé sensiblement au milieu de la pièce et les trous 60 sont formés à des distances $d_1$, $d_2$, $d_3$ et $d_4$ des bords de la pièce, égales respectivement à 3, 4, 5 et 6 millimètres.

L'axe 40 du faisceau est d'abord aligné sur le trou 58 pour mesurer l'amplitude de l'écho à la réflexion sur le fond plat du trou 58.

L'axe 40 du faisceau 20 est ensuite aligné successivement sur chaque trou 60 et l'amplitude de l'écho à la réflexion du faisceau sur le fond plat de chaque trou 60 est mesurée, pour une même colonne d'eau 24 entre le transducteur et la surface de la pièce.

La variation de l'amplitude de l'écho en fonction de la distance entre les axes de ces trous et les bords 34 de la pièce est représentée par la courbe C3 de la figure 10.

La dimension de la zone d'ombre est égale à la valeur de la distance d pour laquelle l'amplitude commence à diminuer depuis la valeur maximale qui correspond à l'amplitude de l'écho sur le fond du trou 58, lorsque la distance d diminue. Celle-ci peut être déterminée sur le graphe par l'abscisse du point de la droite obtenue par régression linéaire des points expérimentaux, qui a pour ordonnée 100%, ou par extrapolation de cette droite comme précédemment décrit. Dans l'exemple représenté, pour une valeur de la colonne d'eau de 40,8mm, entre un transducteur Panametrics V322-239 440 de focale F = 8 pouces et la surface 22 de la pièce, la dimension de la zone d'ombre est égale à 6,31 mm.

Dans un quatrième mode de réalisation de l'invention, on détermine le rayon de la section efficace du faisceau d'ultrasons 20 pour différentes profondeurs de pénétration du faisceau dans la pièce 12.

La valeur maximale de ce rayon correspond à une valeur de la colonne d'eau 24 nulle et est alors égale au rayon de la section efficace du faisceau à la surface 22 de la pièce, qui égal au rayon du transducteur.

La valeur minimale de ce rayon correspond à une profondeur de pénétration du faisceau égale à la distance focale du transducteur et est égale au rayon de la section efficace du faisceau à la surface de la pièce pour une valeur de la colonne d'eau 24 égale à la distance focale du transducteur, qui est déterminable par le premier ou le second mode de réalisation de l'invention.

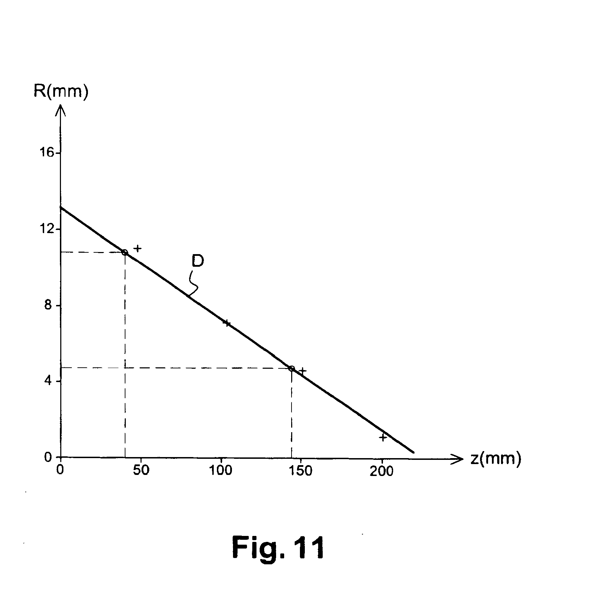

On a pu vérifier dans la pratique que la variation du rayon de la section efficace entre les valeurs maximale et minimale précitées est linéaire. Cette droite de variation D est représentée en figure 11 en fonction de la distance z depuis le transducteur, les distances z étant mesurées dans l'eau.

Dans cet exemple, la valeur maximale du rayon efficace est de 13,1 mm et sa valeur minimale est de 1,4mm, pour un transducteur Panametrics V322-239 440 de focale F = 8 pouces (203,2mm) dans l'eau.

Cette droite permet de déterminer, pour une valeur donnée de la colonne d'eau 24 et pour une profondeur donnée d'un trou ou d'un défaut dans la pièce 12, l'étendue de la zone d'ombre qui est égale à la différence entre le rayon de la section efficace du faisceau à la surface 22 de la pièce et le rayon de la section efficace du faisceau à la profondeur considérée.

Pour une valeur de la colonne d'eau de 40,8mm entre un transducteur Panametrics V322-239 440 de focale F = 8 pouces et la surface 22 de la pièce, l'axe 40 du faisceau du transducteur est aligné sur un trou cylindrique à fond plat de 0,4mm de diamètre formé dans la pièce 12 à une profondeur de 25,4mm de la surface 22.

Le rayon de la section efficace du faisceau à la surface 22 de la pièce est déterminé à partir du graphe de la figure 11, pour une distance z entre la section efficace et le transducteur 18 égale à la valeur de la colonne d'eau 24, et vaut 10,71 mm.

Le rayon de la section efficace du faisceau à la profondeur considérée est déterminé à partir du graphe de la figure 11, pour une distance entre la section efficace et le transducteur égale à la valeur de la colonne d'eau précitée plus la profondeur considérée du trou ramenée à une distance équivalente en eau, c'est-à-dire en tenant compte de la différence des vitesses de propagation du faisceau d'ultrasons 20 dans le matériau de la pièce 12 et dans l'eau 16. Pour une pièce en titane, le rapport des vitesses de propagation d'un faisceau d'ultrasons est $r = v_{ti} / V_{eau} = 6136{,}9 / 1486{,}5 = 4{,}128$. La distance équivalente en eau de la profondeur considérée est de 4,128 * 25, 4 = 104,85mm, et la distance équivalente en eau entre la section efficace et le transducteur est donc égale à 40,8 + 104,85 = 145,65mm, ce qui correspond sur le graphe de la figure 11 à un rayon de la section efficace de 4,58mm. La dimension de la zone morte est égale à 10,71 - 4,58 = 6,13mm.

La droite de variation du rayon de la section efficace du faisceau 20 en fonction de la profondeur de pénétration de ce faisceau ne dépend que des caractéristiques du transducteur 18 utilisé, cette droite permettant de déterminer l'étendue de la zone d'ombre latérale d'une pièce 12 pour une valeur donnée de la colonne d'eau 24 et pour une profondeur donnée dans la pièce.

**Revendications**

1. Procédé de détermination de l'étendue d'une zone d'ombre latérale correspondant à un bord (34) d'une pièce (12), dans un procédé de contrôle de la pièce (12) en immersion au moyen d'au moins un faisceau d'ultrasons (20) émis par un transducteur (18) orienté perpendiculairement à une surface (22) de la pièce (12), **caractérisé en ce qu**'il consiste :

   - à déterminer l'étendue de la zone d'ombre depuis le bord (34) de la pièce (12) par mesure de la section efficace (44) du faisceau d'ultrasons (20) à la surface (22) de la pièce (12), l'étendue de la zone d'ombre pour une distance déterminée entre le transducteur (18) et la surface (22) de la pièce (12) étant égale au rayon de la section efficace (44) du faisceau à la surface (22) de la pièce (12), et
   - à déterminer cette section efficace (44) à partir des variations de l'amplitude d'un écho du faisceau (20) en fonction de la distance de l'axe (40) du faisceau (20) au bord (34) de la pièce (12).

2. Procédé selon la revendication 1, **caractérisé en ce qu**'il consiste à mesurer la variation de l'amplitude de l'écho à la réflexion du faisceau (20) sur la surface (22) de la pièce (12) en fonction de la distance entre l'axe (40) du faisceau (20) et le bord (34) de la pièce (12), la distance entre le transducteur (18) et la surface (22) de la pièce (12) étant constante.

3. Procédé selon la revendication 2, **caractérisé en ce qu**'il consiste

   - à mesurer la distance $d_1$ entre l'axe (40) du faisceau (20) et le bord (34) de la pièce (12) à partir de laquelle l'amplitude de l'écho commence à diminuer quand la distance $d_1$ au bord (34) de la pièce (12) diminue,
   - à mesurer la distance $d_2$ entre l'axe (40) du faisceau (20) et le bord (34) de la pièce (12) pour laquelle ladite amplitude devient nulle, et
   - à obtenir la dimension de la zone d'ombre depuis le bord (34) de la pièce (12) par calcul de la valeur $(d_1 + d_2) / 2$.

4. Procédé selon la revendication 3, **caractérisé en ce qu'**il consiste :

   - à mesurer la distance de l'axe (40) du faisceau (20) au bord (34) de la pièce (12) quand l'amplitude de l'écho est égale à une faible fraction, par exemple de quelques pourcents, de la valeur maximale de cette amplitude, et
   - à déterminer par extrapolation la distance $d_2$ entre l'axe (40) du faisceau (20) et le bord (34) de la pièce (12) pour laquelle ladite amplitude est nulle.

5. Procédé selon la revendication 1, **caractérisé en ce que**, le transducteur (18) étant orienté perpendiculairement à la surface (22) de la pièce (12) en dehors de la zone d'ombre, il consiste :

   - à déplacer en translation sur cette surface (22), le long d'un axe qui coupe l'axe (40) du faisceau d'ultrasons (20), un élément de déviation (46) du faisceau (20), et
   - à relever les positions de cet élément (46) pour lesquelles l'amplitude de l'écho du faisceau (20) à la réflexion sur la surface (22) de la pièce (12) varie entre une valeur maximale et une valeur nulle.

6. Procédé selon la revendication 5, **caractérisé en ce qu**'il consiste :

   - à aligner l'axe d'émission (40) du transducteur (18) sur un trou étalon (28), formé dans la pièce (12) en dehors de la zone d'ombre, et
   - à mesurer la variation de l'amplitude de l'écho du faisceau (20) à la réflexion sur le fond (30) du trou étalon (28) lors de l'interception progressive du faisceau (20) par l'élément de déviation (46).

7. Procédé selon la revendication 5 ou 6, **caractérisé en ce que** l'élément de déviation est un prisme (46) présentant au moins une face (48) de réflexion inclinée, par exemple à 45°, sur la surface (22) de la pièce (12) et sur l'axe (40) du faisceau (20).

8. Procédé selon la revendication 7, **caractérisé en ce qu**'il consiste :

   - à relever les deux positions du prisme (46) diamétralement opposées par rapport à l'axe (40) du faisceau d'ultrasons (20), pour lesquelles l'amplitude de l'écho du faisceau (20) à la réflexion sur la surface (22) de la pièce (12) commence à diminuer depuis une valeur maximale quand on rapproche le prisme (46) de l'axe (40) du faisceau (20), et
- à calculer la moitié de la distance entre ces deux positions pour obtenir l'étendue de la zone d'ombre latérale.

**9.** Procédé selon la revendication 1, **caractérisé en ce qu**'il consiste :

- à déterminer la dimension de la zone d'ombre latérale sur une pièce étalon (12) comportant des trous identiques (58, 60) à fond plat formés à la même profondeur et à différentes distances du bord (34) de la pièce (12), l'un de ces trous (58) étant en dehors de la zone d'ombre et les autres trous (60) étant dans cette zone,
- à aligner le transducteur (18) sur chaque trou (58, 60) successivement et à mesurer l'amplitude de l'écho du faisceau (20) à la réflexion sur le fond du trou (58, 60),
- à construire la courbe de variation de cette amplitude entre une valeur maximale et une valeur nulle en fonction de la distance entre les axes des trous (58, 60) et le bord (34) de la pièce (12), et
- à en déduire la dimension de la zone d'ombre, égale à la valeur de la distance pour laquelle ladite amplitude commence à diminuer quand la distance des axes des trous (58, 60) au bord (34) de la pièce (12) diminue.

**10.** Procédé selon l'une des revendications 6 à 9, **caractérisé en ce que** le fond du ou de chaque trou (28, 58, 60) est situé du côté de la surface (22) de la pièce (12), le trou débouchant sur la surface opposée de la pièce (12).

**11.** Procédé selon la revendication 1, **caractérisé en ce qu**'il consiste à construire une droite de variation du rayon de la section efficace du faisceau d'ultrasons (20) en fonction de la profondeur de pénétration de ce faisceau (20) dans la pièce (12), à partir :

- d'une valeur initiale du rayon correspondant à une distance nulle entre le transducteur (18) et la pièce (12) pour laquelle le rayon de la section efficace à la surface (22) de la pièce (12) est égal au rayon du transducteur (18), et
- d'une valeur finale du rayon à une profondeur dans la pièce (12) correspondant à la distance focale du transducteur (18).

**12.** Procédé selon la revendication 11, **caractérisé en ce qu'**il consiste, ensuite, pour une distance donnée entre le transducteur (18) et la pièce (12) et pour une profondeur donnée dans la pièce (12), à calculer l'étendue de la zone d'ombre latérale par la différence entre le rayon de la section efficace du faisceau (20) à la surface (22) de la pièce (12) et le rayon de la section efficace à la profondeur considérée.

**13.** Procédé selon la revendication 11 ou 12, **caractérisé en ce qu'**il consiste :

- à déterminer la valeur finale du rayon de la section efficace du faisceau (20) en plaçant le transducteur (18) à une distance de la surface (22) de la pièce (12) correspondant à sa distance focale, et
- à mesurer le rayon de la section du faisceau efficace à la surface (22) de la pièce (12).

**Claims**

**1.** A method of determining the extent of a lateral shadow zone corresponding to an edge (34) of a part (12), in a method of inspecting the part (12) in immersion by means of at least one ultrasound beam (20) emitted by a transducer (18) oriented perpendicularly to a surface (22) of the part (12), the method being **characterized in that** it consists:

· in determining the extent of the shadow zone from the edge (34) of the part (12) by measuring the effective section (44) of the ultrasound beam (20) at the surface (22) of the part (12), the extent of the shadow zone for a determined distance between the transducer (18) and the surface (22) of the part (12) being equal to the radius of the effective section (44) of the beam at the surface (22) of the part (12); and
· in determining said effective section (44) from variations in the amplitude of an echo of the beam (20) as a function of the distance of the axis (40) of the beam (20) from the edge (34) of the part (12).

**2.** A method according to claim 1, **characterized in that** it consists in measuring the variation in the echo amplitude at the reflection of the beam (20) on the surface (22) of the part (12) as a function of the distance between the axis (40) of the beam (20) and the edge (34) of the part (12), the distance between the transducer (18) and the surface (22) of the part (12) being constant.

**3.** A method according to claim 2, **characterized in that** it consists:

· in measuring the distance $d_1$ between the axis (40) of the beam (20) and the edge (34) of the part (12) from which the echo amplitude begins to decrease when the distance $d_1$ from the edge (34) of the part (12) decreases;
· in measuring the distance $d_2$ between the axis (40) of the beam (20) and the edge (34) of the part (12) at which said amplitude becomes zero; and
· in obtaining the size of the shadow zone from the edge (34) of the part (12) by calculating the value $(d_1 + d_2)/2$.

**4.** A method according to claim 3, **characterized in that** it consists:

· in measuring the distance of the axis (40) of the beam (20) from the edge (34) of the part (12) when the echo amplitude is equal to a small fraction, e.g. a few percent, of the maximum value of said amplitude; and
· in determining the distance $d_2$ between the axis (40) of the beam (20) and the edge (34) of the part (12) at which said amplitude becomes zero by extrapolation.

**5.** A method according to claim 1, **characterized in that** the transducer (18) is oriented perpendicularly to the surface (22) of the part (12) away from the shadow zone, and the method consists:

· in moving a beam deflector element (46) in translation on said surface (22) along an axis that intersects the axis (40) of the ultrasound beam (20); and
· in identifying the positions of said element (46) at which the echo amplitude of the beam (20) at the reflection on the surface (22) of the part (12) varies between a maximum value and a zero value.

**6.** A method according to claim 5, **characterized in that** it consists:

· in aligning the emission axis (40) of the transducer (18) on a calibration hole (28) formed in the part (12) outside the shadow zone; and
· in measuring the variation in the echo amplitude of the beam (20) at the reflection on the end wall (30) of the calibration hole (28) while the beam (20) is being progressively intercepted by the deflector element (46).

**7.** A method according to claim 5 or claim 6, **characterized in that** the deflection element is a prism (46) presenting at least one reflection face (48) that is inclined, e.g. at 45°, to the surface (22) of the part (12) and to the axis (40) of the beam (20).

**8.** A method according to claim 7, **characterized in that** it consists:

· in identifying the two diametrically opposite positions of the prism (46) about the axis (40) of the ultrasound beam (20) for which the echo amplitude of the beam (20) at the reflection on the surface (22) of the part (12) begins to decrease from a maximum value on moving the prism (46) closer to the axis (40) of the beam (20); and
· in calculating half of the distance between these two positions in order to obtain the extent of the lateral shadow zone.

**9.** A method according to claim 1, **characterized in that** it consists:

· in determining the size of the lateral shadow zone on a calibration part (12) having identical flat-ended holes (58, 60) formed to the same depth and at different distances from the edge (34) of the part (12), one of the holes (58) being outside the shadow zone and the other holes (60) being in said zone;
· in aligning the transducer (18) on each hole (58, 60) in succession and in measuring the echo amplitude of the beam (20) at the reflection on the end wall of the hole (58, 60);
· in plotting the curve showing variation in said amplitude between a maximum value and a zero value as a function of the distance between the axes of the holes (58, 60) and the edge (34) of the part (12); and
· in deducing the size of the shadow zone as being equal to the value of the distance at which said amplitude begins to decrease with decreasing distance between the axes of the holes (58, 60) and the edge (34) of the part (12).

**10.** A method according to any one of claims 6 to 9, **characterized in that** the end wall of the or each hole (28, 58, 60) is situated beside the surface (22) of the part (12) and the hole opens out into the opposite surface of the part (12).

11. A method according to claim 1, **characterized in that** it consists in plotting a straight line showing variation in the radius of the effective section of the ultrasound beam (20) as a function of the penetration depth of said beam (20) in the part (12) on the basis of:

> · an initial value for the radius corresponding to a zero distance between the transducer (18) and the part (12) at which the radius of the effective section at the surface (22) of the part (12) is equal to the radius of the transducer (18); and
> · a final value of the radius at a depth in the part (12) corresponding to the focal length of the transducer (18).

12. A method according to claim 11, **characterized in that** it then consists, for a given distance between the transducer (18) and the part (12) and for a given depth within the part (12), in calculating the extent of the lateral shadow zone by taking the difference between the radius of the effective section of the beam (20) at the surface (22) of the part (12) and the radius of the effective section at the depth under consideration.

13. A method according to claim 11 or claim 12, **characterized in that** it consists:

> · in determining the final value of the radius of the effective section of the beam (20) by placing the transducer (18) at a distance from the surface (22) of the part (12) that corresponds to its focal length; and
> · in measuring the radius of the effective section of the beam at the surface (22) of the part (12).

**Patentansprüche**

1. Verfahren zur Bestimmung der Ausdehnung einer seitlichen Schattenzone, die einer Kante (34) eines Werkstücks (12) entspricht, in einem Verfahren der Untersuchung des Werkstücks (12) in einem Bad mittels mindestens eines Ultraschallbündels (20), das von einem Schallkopf (18) abgegeben wird, der senkrecht auf eine Oberfläche (22) des Werkstücks (12) gerichtet ist,
**dadurch gekennzeichnet,**
**dass** es darin besteht,

> - die Ausdehnung der Schattenzone ab der Kante (34) des Werkstücks (12) durch Messen des wirksamen Querschnitts (44) des Ultraschallbündels (20) auf der Oberfläche (22) des Werkstücks (12) zu bestimmen, wobei die Ausdehnung der Schattenzone bei einem bestimmten Abstand zwischen dem Schallkopf (18) und der Oberfläche (22) des Werkstücks (12) gleich dem Radius des wirksamen Querschnitts (44) des Ultraschallbündels (20) auf der Oberfläche (22) des Werkstücks (12) ist, und
> - diesen wirksamen Querschnitt (44) aus Änderungen der Amplitude eines Echos des Bündels (20) in Abhängigkeit von dem Abstand der Achse (40) des Bündels (20) zu der Kante (34) des Werkstücks (12) zu bestimmen.

2. Verfahren nach Anspruch 1,
**dadurch gekennzeichnet,**
**dass** es darin besteht, die Änderung der Amplitude des Echos beim Reflektieren des Bündels (20) an der Oberfläche (22) des Werkstücks (12) in Abhängigkeit von dem Abstand zwischen der Achse (40) des Bündels (20) und der Kante (34) des Werkstücks (12) zu messen, wobei der Abstand zwischen dem Schallkopf (18) und der Oberfläche (22) des Werkstücks (12) konstant ist.

3. Verfahren nach Anspruch 2,
**dadurch gekennzeichnet,**
**dass** es darin besteht,

> - den Abstand $d_1$ zwischen der Achse (40) des Bündels (20) und der Kante (34) des Werkstücks (12) zu messen, ab dem, wenn der Abstand $d_1$ zur Kante (34) des Werkstücks (12) kleiner wird, die Amplitude des Echos anfängt abzunehmen,
> - den Abstand $d_2$ zwischen der Achse (40) des Bündels (20) und der Kante (34) des Werkstücks (12) zu messen, bei dem diese Amplitude Null wird, und
> - die Abmessung der Schattenzone ab der Kante (34) des Werkstücks (12) durch Berechnen des Werts $(d_1 + d_2) / 2$ zu erzielen.

4. Verfahren nach Anspruch 3,

**dadurch gekennzeichnet,**
**dass** es darin besteht,

- den Abstand der Achse (40) des Bündels (20) zu der Kante (34) des Werkstücks (12) zu messen, wenn die Amplitude des Echos gleich einem kleinen Bruchteil, beispielsweise einigen Prozenten des Maximalwerts dieser Amplitude entspricht, und
- durch Extrapolieren den Abstand $d_2$ zwischen der Achse (40) des Bündels (20) und der Kante (34) des Werkstücks (12) zu messen, bei dem diese Amplitude gleich Null ist.

5. Verfahren nach Anspruch 1,
**dadurch gekennzeichnet,**
**dass** es bei einem senkrecht auf die außerhalb der Schattenzone befindliche Oberfläche (22) des Werkstücks (12) gerichteten Schallkopf (18) darin besteht,

- ein Umlenkelement (46) des Bündels (20) auf dieser Oberfläche (22) in einer Vorschubbewegung entlang einer Achse, die die Achse (40) des Ultraschallbündels (20) schneidet, zu verschieben, und
- die Positionen dieses Elements (46), bei denen die Amplitude des Echos des Bündels (20) beim Reflektieren an der Oberfläche (22) des Werkstücks (12) zwischen einem Maximalwert und einem Wert Null variiert, aufzunehmen.

6. Verfahren nach Anspruch 5,
**dadurch gekennzeichnet,**
**dass** es darin besteht,

- die Emissionsachse (40) des Schallkopfs (18) auf ein Vergleichsmaßloch (28), das in dem Werkstück (12) außerhalb der Schattenzone gebildet ist, auszurichten, und
- die Amplitudenänderung des Echos des Bündels (20) beim Reflektieren auf dem Boden (30) des Vergleichsmaßlochs (28) beim fortschreitenden Einfangen des Bündels (20) durch das Umlenkelement (46) zu messen.

7. Verfahren nach Anspruch 5 oder 6,
**dadurch gekennzeichnet,**
**dass** das Umlenkelement ein Prisma (46) ist, das mindestens eine Reflexionsseite (48) aufweist, die zur Oberfläche (22) des Werkstücks (12) und zur Achse (40) des Bündels (20) geneigt ist, beispielsweise im 45°-Winkel.

8. Verfahren nach Anspruch 7,
**dadurch gekennzeichnet,**
**dass** es darin besteht,

- die beiden der Achse (40) des Ultraschallbündels (20) diametral gegenüberliegenden Positionen des Prismas (46) aufzunehmen, bei denen die Amplitude des Echos des Bündels (20) beim Reflektieren an der Oberfläche (22) des Werkstücks (12) beginnt, sich von einem Maximalwert aus zu verringern, wenn das Prisma (46) der Achse (40) des Bündels (20) angenähert wird, und
- die Hälfte des Abstands zwischen diesen beiden Positionen zu berechnen, um die Ausdehnung der seitlichen Schattenzone zu erhalten.

9. Verfahren nach Anspruch 1,
**dadurch gekennzeichnet,**
**dass** es darin besteht,

- die Abmessung der seitlichen Schattenzone an einem Vergleichsmaßwerkstück (12) zu bestimmen, das identische Löcher (58, 60) mit flachem Boden aufweist, die mit der gleichen Tiefe und in unterschiedlichen Abständen von der Kante (34) des Werkstücks (12) ausgeführt sind, wobei sich das eine dieser Löcher (58) außerhalb der Schattenzone befindet und die anderen Löcher (60) sich innerhalb dieser Schattenzone befinden,
- den Schallkopf (18) nacheinander auf jedes Loch (58, 60) auszurichten und die Amplitude des Echos des Bündels (20) beim Reflektieren am Boden des Lochs (58, 60) zu messen,
- die Kurve der Änderung dieser Amplitude zwischen einem Maximalwert und einem Null-Wert in Abhängigkeit vom Abstand zwischen den Achsen der Löcher (58, 60) und dem Werkstück (12) zu konstruieren, und
- daraus die Abmessung der Schattenzone abzuleiten, die gleich dem Wert des Abstands ist, bei dem diese Amplitude beginnt, sich zu verringern, wenn sich der Abstand der Achsen der Löcher (58, 60) von der Kante (34) des Werkstücks (12) verringert.

10. Verfahren nach einem der Ansprüche 6 bis 9,
    **dadurch gekennzeichnet,**
    **dass** der Boden des Lochs oder jedes Lochs (28, 58, 60) sich auf der Seite der Oberfläche (22) des Werkstücks (12) befindet, wobei das Loch an der gegenüberliegenden Oberfläche des Werkstücks (12) mündet.

11. Verfahren nach Anspruch 1,
    **dadurch gekennzeichnet,**
    **dass** es darin besteht, eine Variationsgerade des Radius' des wirksamen Querschnitts des Ultraschallbündels (20) in Abhängigkeit von der Eindringtiefe dieses Bündels (20) in das Werkstück (12) zu konstruieren, und zwar aus:

    - einem Anfangswert des Radius, der einem Null-Abstand zwischen dem Schallkopf (18) und dem Werkstück (12), bei dem der Radius des wirksamen Querschnitts auf der Oberfläche (22) des Werkstücks (12) gleich dem Radius des Schallkopfs (18) ist, entspricht, und
    - einem Endwert des Radius bei einer Tiefe in dem Werkstück (12), die dem Brennpunktabstand des Schallkopfs (18) entspricht.

12. Verfahren nach Anspruch 11,
    **dadurch gekennzeichnet,**
    **dass** es darin besteht, sodann die Ausdehnung der seitlichen Schattenzone bei einem gegebenen Abstand zwischen dem Schallkopf (18) und dem Werkstück (12) und bei einer gegebenen Tiefe in dem Werkstück (12) mittels der Differenz zwischen dem Radius des wirksamen Querschnitts dieses Bündels (20) auf der Oberfläche (22) des Werkstücks (12) und dem Radius des wirksamen Querschnitts in der in Betracht kommenden Tiefe zu berechnen.

13. Verfahren nach Anspruch 11 oder 12,
    **dadurch gekennzeichnet,**
    **dass** es darin besteht,

    - den Endwert des Radius des wirksamen Querschnitts des Bündels (20) zu bestimmen, indem der Schallkopf (18) in einen Abstand von der Oberfläche (22) des Werkstücks (12) gebracht wird, der seinem Brennpunktabstand entspricht, und
    - den Radius des wirksamen Querschnitts des Bündels (20) an der Oberfläche (22) des Werkstücks (12) zu messen.

**Fig. 1**

**Fig. 2**

**Fig. 3**

**Fig. 4**

**Fig. 5**

**Fig. 6**

**Fig. 7**

**Fig. 8**

Fig. 9

Fig. 10

**Fig. 11**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3969926 A